# EUROPÄISCHE PATENTANMELDUNG

(11) **EP 4 806 667 A1**
(43) Veröffentlichungstag der Anmeldung: **16.09.2026**
(21) Anmeldenummer: 26158045.0
(22) Anmeldetag: 12.02.2026
(51) Int. Cl.: B60C 9/18, B60C 9/20

(54) **NUTZFAHRZEUGREIFEN**

(30) Priorität: 11.03.2025 DE 102025109131
(71) Anmelder: Continental Reifen Deutschland GmbH, 30175 Hannover (DE)
(72) Erfinder: Pruß, Noa, 30175 Hannover (DE); Kranich, Henrik, 30175 Hannover (DE); Plückers, Matthias, 30175 Hannover (DE); Dettmer, Fabian, 30175 Hannover (DE)
(74) Vertreter: Continental Corporation

(57) **Zusammenfassung**

Die Erfindung betrifft einen Nutzfahrzeugreifen mit einem Gürtelverband (2) mit einer radial innersten Gürtellage (2a), einer radial äußersten Gürtellage (2c) und zumindest einer zwischen diesen befindlichen mittleren Gürtellage (2b), wobei die Gürtellagen (2a, 2b, 2c) jeweils aus in eine Gürtelgummierung (G) eingebetteten Stahlfilamenten oder aus Stahlfilamenten (9) gebildeten Stahlkorden (7, 8) bestehen, wobei in der bzw. den mittleren Gürtellage(n) (2c) Stahlkorde (7) vom Typ offener Stahlkord vorgesehen sind, welche die Konstruktion M+N aufweisen und aus Stahlfilamenten (9) gebildet sind, welche einen Durchmesser (d) von höchstens 0,50 mm und eine Zugfestigkeit - ermittelt nach ISO 17832:2018 - aufweisen, deren Mindestwert 4200 MPa - 2000 MPa/mm · d [mm] beträgt, wobei d [mm] der Durchmesser (d) der Stahlfilamente (9) in Millimeter ist.

Die Stahlkorde (7) der oder jeder oder zumindest einer der mittleren Gürtellage(n) (2b) weisen die Konstruktion M+N auf, wobei N > 2 ist.

## Beschreibung

Die Erfindung betrifft einen Nutzfahrzeugreifen mit einem Gürtelverband mit einer radial innersten Gürtellage, einer radial äußersten Gürtellage und zumindest einer zwischen diesen befindlichen mittleren Gürtellage, wobei die Gürtellagen jeweils aus in eine Gürtelgummierung eingebetteten Stahlkorden bestehen, wobei die Stahlkorde der mittleren Gürtellage(n) vom Typ offener Stahlkord sind, die Konstruktion M+N aufweisen und aus Stahlfilamenten gebildet sind, welche einen Durchmesser von höchstens 0,50 mm und eine Zugfestigkeit - ermittelt nach ISO 17832:2018 - aufweisen, deren Mindestwert 4200 MPa - 2000 MPa/mm · d [mm] beträgt, wobei d [mm] der Durchmesser der Stahlfilamente in Millimeter ist.

Ein derartiger Nutzfahrzeugreifen ist beispielsweise aus der EP 2 433 814 A1 bekannt. Dieser Nutzfahrzeugreifen weist gemäß einem Ausführungsbeispiel vier Gürtellagen mit Stahlkorden auf, deren Stahlfilamente von der Festigkeitsklasse UT oder MT sind und einen Durchmesser von 0,08 mm bis 0,35 mm, insbesondere von 0,18 mm bis 0,30 mm oder von 0,21 mm bis 0,60 mm, aufweisen. Die Stahlfilamente der Festigkeitsklasse UT weisen bei einem Durchmesser von 0,20 mm eine Zugfestigkeit von zumindest 4000 MPa auf. Die Stahlfilamente der Festigkeitsklasse MT weisen bei einem Durchmesser von 0,20 mm eine Zugfestigkeit von zumindest 4500 MPa auf. Der Stahlkord ist beispielsweise vom Typ kompakter Stahlkord ("compact cord"), bei welchem die die Lagenfilamente bildenden Stahlfilamente einander kontaktieren, und weist die Konstruktion 3 x 1/5, 4 x 1/5, 1/6, 3 x 1/6 oder 4 x 1/6 auf. 1/6 bedeutet, dass der Stahlkord aus einem einzigen Strang ("single strand cord") mit einem einzigen ein Kernfilament bildenden Stahlfilament und sechs einander kontaktierenden, Lagenfilamente bildenden Stahlfilamenten aufgebaut ist. 4 x 1/6 bedeutet, dass der Stahlkord aus vier solcher Stränge aufgebaut ist ("multi-strand cord"). Alternativ ist der Stahlkord vom Typ offener Stahlkord ("open cord"), bei welchem die die Lagenfilamente bildenden Stahlfilamente einander nicht kontaktieren, und weist die Konstruktion 2 x 1, 5 x 1, 7 x 1, 3 x 2, 3 x 3, 3 x 4, 3 x 6, 3 x 7,4 x 2,4 x 4, 4 x 6,4 x 7, 2 + 1, 2 + 2 oder 4 x (3 x 2) auf. Als Stahlkorde vom Typ offener Stahlkord mit der Konstruktion M + N sind somit Stahlkorde der Konstruktionen 2 + 1 und 2 + 2 genannt.

Aus der DE 10 2016 225 234 A1 ist ein Nutzfahrzeugreifen mit einem Gürtelverband mit mehr als zwei Gürtellagen bekannt, welcher gemäß einer möglichen Merkmalskombination in jeder Gürtellage Stahlkorde aus zwei miteinander verdrillten Stahlfilamenten mit einem Durchmesser von 0,31 mm bis 0,36 mm, insbesondere von 0,31 mm bis 0,33 mm, besonders bevorzugt von 0,32 mm, und einer Zugfestigkeit - ermittelt in Anlehnung an ASTM D 2969, ASTM D 4975 und BISTA E6 - von 3185 MPa bis 3920 MPa aufweist. Die radial innerste Gürtellage weist bei einer vorgegebener Dehnung um 1% in Richtung der Längserstreckungsrichtung der Festigkeitsträger eine Spannung von 26.000 N per Dezimeter Breite bis 43.000 N per Dezimeter Breite auf, wodurch der Reifen einen geringen Rollwiderstand und gute Handlingeigenschaften aufweisen soll.

Es ist bekannt, dass an Stahlkorde für Gürtellagen hohe Anforderungen gestellt werden, zu welchen eine ausreichend hohe Zug- und Biegesteifigkeit, eine gute Ermüdungsbeständigkeit, eine gute Korrosionsbeständigkeit, eine gute Gummidurchdringung und eine gute Haftung zur umgebenden Gummimaterial gehören.

Für die Gürtelhaltbarkeit ist es vorteilhaft, Stahlkorde mit einem größeren Durchmesser zu wählen und mit einer geringen Korddichte in der Gürtellage anzuordnen. Eine größere Festigkeit der Stahlkorde sowie ein geringer gegenseitiger Abstand der Stahlkorde (hohe Korddichte) begünstigt dabei die Robustheit des Gürtelpakets.

Offene Stahlkorde sorgen bekannter Weise für eine gute Durchdringung von Gummimaterial in die Zwischenräume, also die Räume zwischen den Stahlfilamenten, bei der Vulkanisation, wodurch vor allem das bzw. die Kernfilament(e) gut gegen Verschieben fixiert und die Korrosionsgefahr verringert ist.

Eine weitere Anforderung an die Gürtellagen von Nutzfahrzeugreifen ist, dass diese derart hinsichtlich der Gürtelkorde ausgelegt sind, dass eine ausreichende Festigkeit der Lauffläche gegen das Eindringen von Fremdkörpern erreicht wird. In einigen Staaten existieren von den zuständigen Behörden diesbezügliche Mindeststandards, wobei insbesondere ein Bestehen des aus den USA bekannte "Plungertests" (Durchstichtest) wünschenswert bzw. erforderlich ist.

Bei Nutzfahrzeugreifen der eingangs genannten Art besteht aktuell weiterhin das Bestreben, eine möglichst ausgewogene Balance zwischen dem von den Gürtellagen kommenden Beitrag zum Rollwiderstand des Reifens und dem Bestehen des Durchstichtests sicherzustellen.

Der Erfindung liegt daher die Aufgabe zugrunde, einen im Hinblick auf den Durchstichtest weiter verbesserten Nutzfahrzeugreifen zur Verfügung zu stellen, wobei der Rollwiderstand des Reifens weiterhin möglichst unverändert gering bleiben soll.

Gelöst wird die gestellte Aufgabe erfindungsgemäß dadurch, dass die Stahlkorde der mittleren Gürtellage(n) die Konstruktion M+N aufweisen, wobei N > 2 ist.

Dementsprechend weisen die Stahlkorde in der bzw. den mittleren Gürtellage(n) (sog. Arbeitslage(n)) zumindest drei Lagenfilamente bildende Stahlfilamente auf. Diese zumindest drei Lagenfilamente stellen eine im Hinblick auf den Durchstichtest günstige Menge bzw. ein günstiges Volumen an Stahl in der bzw. den mittleren Gürtellagen zur Verfügung. Bedingt dadurch, dass die Stahlkorde vom Typ offener Stahlkord sind, ist die Gummidurchdringung in die Bereiche zwischen den zumindest drei Langefilamente bildenden Stahlfilamenten derart, dass die Lagenfilamente gegeneinander und zusätzlich auch gegenüber dem bzw. den Kernfilament(en) unter Aufrechterhaltung einer hohen Flexibilität des Stahlkords gut stabilisiert sind, sodass der Beitrag der Stahlkorde zum Rollwiderstand verhältnismäßig gering ausfällt und dieser somit zumindest im Wesentlichen unverändert gut ist.

Gemäß einer bevorzugten Ausführung weisen die Stahlkorde der oder jeder oder zumindest einer der mittleren Gürtellage(n) die Konstruktion M+N auf, wobei N > 3, vorzugsweise N > 4, ist. Diese Maßnahme ist für die erwähnte Stabilisierung der Lagenfilamente gegeneinander und gegenüber dem bzw. den Kernfilament(en) sowie im Hinblick auf die Durchstichbeständigkeit von zusätzlichem Vorteil.

Gemäß einer weiteren bevorzugten Ausführung weisen die Stahlkorde der oder jeder oder zumindest einer der mittleren Gürtellage(n) die Konstruktion M+N auf, wobei N ≤ 9 ist. Diese Begrenzung der Anzahl der Lagenfilamente ist für die Gummidurchdringung günstig, sodass sich die Bereiche zwischen den Langefilamenten auf eine für deren gegenseitige Stabilisierung besonders günstigen Weise bei der Vulkanisation mit Gummi füllen, was im Hinblick auf einen geringen Rollwiderstand von weiterem Vorteil ist.

Ein besonders vorteilhafter Kompromiss zwischen der Durchstichperformance und dem Rollwiderstand lässt sich erreichen, wenn die Stahlkorde der oder jeder oder zumindest einer der mittleren Gürtellage(n) die Konstruktion M+N aufweisen, wobei M 1 bis 4 beträgt.

In diesem Zusammenhang ist es von weiterem Vorteil, wenn die Stahlkorde der oder jeder oder zumindest einer der mittleren Gürtellage(n) die Konstruktion 1+5, 2+4, 2+7 oder 3+8 aufweisen.

Gemäß einer weiteren bevorzugten Ausführung, welche ebenfalls im Hinblick auf den zu lösenden Zielkonflikt vorteilhaft ist, sind in der radial innersten Gürtellage und/oder in der radial äußersten Gürtellage Stahlkorde vorgesehen, welche aus Stahlfilamenten gebildet sind, die einen Durchmesser von höchstens 0,50 mm und eine Zugfestigkeit - ermittelt nach ISO 17832:2018 - aufweisen, deren Mindestwert 4200 MPa - 2000 MPa/mm · d [mm] beträgt, wobei d [mm] der Durchmesser der Stahlfilamente in Millimeter ist, und
- wobei die Stahlkorde entweder die Konstruktion M+N aufweisen, wobei M 1 oder 2 und N von 2 bis 5 beträgt, oder
- wobei die Stahlkorde die Konstruktion single-strand aufweisen.

Insbesondere ist es im Hinblick auf die Durchstichfestigkeit günstig, wenn
- die Stahlkorde der oder jeder mittleren Gürtellage(n) und/oder
- die Stahlkorde der radial innersten Gürtellage und der radial äußersten Gürtellage
jeweils in einer Korddichte von 30 epdm bis 60 epdm angeordnet sind.

Gemäß einer weiteren vorteilhaften Ausgestaltung ist vorgesehen, dass
- die Stahlkorde der oder jeder mittleren Gürtellage(n) und/oder
- die Stahlkorde der radial innersten Gürtellage und der radial äußersten Gürtellage
jeweils derart angeordnet sind, dass einander unmittelbar benachbarte Stahlkorde
- im Reifenquerschnitt betrachtet und bezogen auf die Stahlkorde einhüllende, kleinstmögliche Kreise - voneinander als kleinstmögliche Abstände ermittelte gegenseitige Abstände von zumindest 0,45 mm, insbesondere von zumindest 0,60 mm, bevorzugt von zumindest 0,70 mm, aufweisen. Diese Maßnahme ist für die Balance zwischen der Durchstichfestigkeit und dem Beitrag der Stahlkorde zum Rollwiderstand von weiterem Vorteil.

Gemäß einer weiteren bevorzugten Ausführung verlaufen die Stahlkorde der Konstruktion M+N der bzw. jeder mittleren Gürtellage(n) unter einem Winkel von 15° bis 40°, insbesondere von bis zu 24°, vorzugweise von bis zu 22°, besonders bevorzugter Weise von bis zu 20°.

Bei der letztgenannten Ausführung besteht eine vorteilhafte Weiterentwicklung darin, dass der Gürtelverband genau vier oder genau fünf Gürtellagen aufweist, wobei bei genau vier Gürtellagen eine einzige der mittleren Gürtellagen als 0°-Lage ausgeführt ist und wobei bei fünf Gürtellagen die mittlere Gürtellage als 0°-Lage ausgeführt ist, wobei die Stahlkorde in der 0°-Lage zur Umfangsrichtung unter einem Winkel von 0° bis 5°, insbesondere von bis zu 3°, verlaufen und von den Stahlkorden der Konstruktion M+N in der bzw. jeder anderen mittleren Gürtellage abweichen, insbesondere Stahlkorde mit einer von der Konstruktion M+N abweichenden Konstruktion sind. Diese ist für die Druckverteilung im Footprint und somit für den Rollwiderstand von Vorteil.

Gemäß einer weiteren bevorzugten Ausführung beträgt der Mindestwert der Zugfestigkeit der Stahlfilamente 4250 MPa - 2000 MPa/mm · d [mm], insbesondere 4400 MPa - 2000 MPa/mm · d [mm], bevorzugt 4700 MPa - 2000 MPa/ mm· d [mm].

Für die Balance zwischen dem Rollwiderstand und der Durchstichfestigkeit ist von weiterem Vorteil, wenn der Durchmesser der Stahlfilamente der Stahlkorde mindestens 0,14 mm, insbesondere 0,17 mm bis 0,40 mm, vorzugsweise höchstens 0,36 mm, bevorzugt höchstens 0,28 mm, beträgt.

Für den Rollwiderstand des Nutzfahrzeugreifens ist es von weiterem Vorteil, wenn die Gürtelgummierung eine Rückprallelastizität bei einer Temperatur von 70°C, ermittelt nach DIN 53512, von 45% bis 60%, insbesondere von zumindest 50%, aufweist.

Für das Zusammenspiel der Gürtelgummierung mit den in ihr enthaltenen Stahlkorden ist es vorteilhaft, wenn die Gürtelgummierung einen Modul E' bei einer Dehnung von 0,15% und einer Temperatur von 55°C, ermittelt gemäß ISO 4664-1, von mindestens 12,0 MPa, insbesondere von 14,0 MPa bis 20,0 MPa, aufweist.

Für die Rissbeständigkeit der Gürtelgummierung ist es günstig, wenn diese eine Reißdehnung bei einer Temperatur von 25°C, ermittelt nach DIN 53504, von 350% bis 500%, insbesondere von 400% bis 500%, aufweist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen Teilquerschnitt eines Nutzfahrzeugreifens im Schulterbereich mit einer Ausführungsform der Erfindung,
Fig. 2 einen vergrößerten Teilquerschnitt durch eine mittlere Gürtellage des Nutzfahrzeugreifens,
Fig. 3 einen vergrößerten Teilquerschnitt durch eine weitere Gürtellage des Nutzfahrzeugreifens und
Fig. 4 eine aus der ISO 17832:2018 stammende Darstellung zur Klassifikation von Stahlfilamenten basierend auf deren Zugfestigkeit.

Gemäß der Erfindung ausgeführte Nutzfahrzeugreifen sind Reifen für mehrspurige Nutfahrzeuge in Radialbauart, insbesondere für Busse oder Lastkraftwagen (LKWs), sowie vorzugsweise Fahrzeugluftreifen. Die Nutzfahrzeugreifen sind insbesondere für Felgen mit einem Felgendurchmesser von 17,5, 19,5 oder 22,5 Zoll vorgesehen und weisen einen Traglastindex von insbesondere >126 auf.

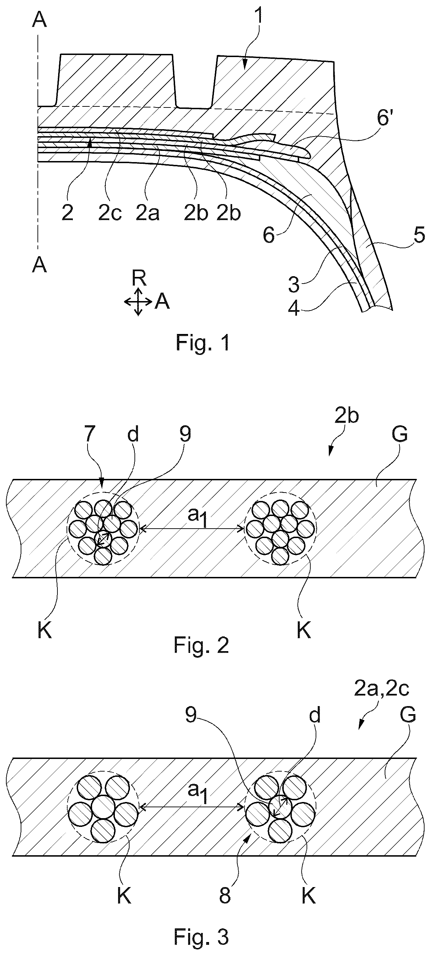

Fig. 1 zeigt einen schulterseitigen Teilquerschnitt eines Nutzfahrzeugreifens. Die Reifenäquatorialebene ist durch eine Linie A-A, die radiale Richtung ist durch einen Doppelpfeil R und die axiale Richtung ist durch einen Doppelpfeil A gekennzeichnet. Unter der "axialen Richtung" wird die senkrecht zur Reifenäquatorialebene (Linie A-A) verlaufende Richtung verstanden. Unter der "radialen Richtung" wird die im in axialer Richtung ausgerichteten Querschnitt (nachfolgend als Reifenquerschnitt bezeichnet) parallel zur Reifenäquatorialebene verlaufende Richtung verstanden.

### 1. Allgemeine Beschreibung des Nutzfahrzeugreifens

Der Nutzfahrzeugreifen weist einen profilierten Laufstreifen 1, einen Gürtelverband 2, eine Karkasseinlage 3, eine luftdichte Innenschicht 4, Seitenwände 5 und in jedem Schulterbereich ferner einen den Gürtelverband 2 abstützenden Schulterpolster 6 und einen Gürtelkantenpolster 6' auf. Sämtlich der genannten Bauteile sind in Umfangsrichtung umlaufende Bauteile.

Der Laufstreifen 1, die Karkasseinlage 3, die Innenschicht 4, die Seitenwände 5, die Schulterpolster 6, die Gürtelkantenpolster 6' und die nicht gezeigten Wulstbereiche können in an sich bekannter Weise ausgeführt sein.

Der Gürtelverband 2 befindet sich in bekannter Weise zwischen dem Laufstreifen 1 und der Karkasseinlage 3 und weist vier aufeinanderliegende Gürtellagen, nämlich eine radial innerste Gürtellage 2a, welche auch als Blocklage bezeichnet wird, eine radial äußerste Gürtellage 2c, welche auch als Schutzlage bezeichnet wird, und zwei zwischen der radial innersten Gürtellage 2a und radial äußersten Gürtellage 2c befindliche, mittlere Gürtellagen 2b, welche auch als Arbeitslagen bezeichnet werden, auf. Die mittleren Gürtellagen 2b verlaufen, im Querschnitt betrachtet, in axialer Richtung über die radial innerste Gürtellage 2a und radial äußerste Gürtellage 2c hinaus.

Die Gürtellagen 2a, 2b, 2c bestehen jeweils aus in einer Gürtelgummierung G (Fig. 2: Mittlere Gürtellage 2b, Fig. 3: Gürtellage 2a, 2c) eingebetteten, parallel zueinander verlaufenden Stahlkorden 7 (Fig. 2: Mittlere Gürtellagen 2b), 8 (Fig. 3: Gürtellage 2a, 2c).

Der Schulterpolster 6 verläuft in Kontakt mit der Außenseite der Karkasseinlage 3 und verläuft ferner unter einen Endabschnitt der radial innerste Gürtellage 2a sowie unter einen Endabschnitt der angrenzenden, mittleren Gürtellage 2b hinein. Der Gürtelkantenpolster 6' verläuft radial außerhalb des Schulterpolsters 6 zwischen die Endabschnitte der mittleren Gürtellagen 2b hinein.

### 2. Zur Gürtelgummierung

Die Gürtelgummierung G ist im Hinblick auf ihren Beitrag zum Rollwiderstand des Nutzfahrzeugreifens, auf ihr Zusammenspielen mit den Stahlkorden 7, 8 und ihre Rissbeständigkeit optimiert.

Tabelle 1 zeigt ein verallgemeinertes Rezepte R für Kautschukmischungen, aus welchen das Gürtelgummierung G gefertigt ist. Das Rezepte R ist - wie in der Kautschuktechnologie üblich - auf 100 Teile Kautschuk (phr = parts per hundred parts rubber) bezogen. Die Mengenangaben beziehen sich daher jeweils auf 100 Massenteile des Grundpolymers, also des Kautschuks, bzw. bei Polymerblends auf 100 Massenteile der Grundpolymere, also der Kautschuke.

**Tabelle 1**

| **Bestandteil** | **Einheit** | **R** |
|---|---|---|
| Naturkautschuk(e) (NR) | | 75 bis 85 |
| Polybutadien(e) (BR) | | 15 bis 25 |
| Kieselsäure(n) (Silica) | phr | 55 bis 65 |
| Beschleuniger und Schwefel | | 5,5 bis 6,5 |
| Haftmittel | | 4,5 bis 6,5 |
| Sonstige Zusatzstoffe | | 22,5 bis 27,5 |

Zu den sonstigen Zusatzstoffen gehören insbesondere Weichmacher, Prozesshilfsmittel, Silankupplungsagenz(ien), Aktivatoren (Stearinsäure, Zinkoxid(e)) und Alterungsschutzmittel. Als Haftmittel kommt beispielsweise ein verethertes Melaminharz (Methylendonor) und ein Methylenakzeptor, beispielsweise ein Phenolharz, in Frage, wie etwa in der EP 2 674 452 A1 oder der WO 2023/030592 A1 offenbart. Ferner kommt als Haftmittel zumindest ein organisches Kobaltsalz in Frage.

Nachfolgend wird auf Vulkanisateigenschaften der Gürtelgummierung G eingegangen, von welchen eine ein Rollwiderstandsindikator (Indikatoren für den Beitrag der Gürtelgummierung G zum Rollwiderstand des Nutzfahrzeugreifens), eine ein Indikator für das Zusammenspielen mit den Stahlkorden 7, 8 und eine ein Rissbeständigkeitsindikator (Indikator für die Rissbeständigkeit der Gürtelgummierung G) ist.

Als Rollwiderstandsindikator wird die Rückprallelastizität bei einer Temperatur von 70°C gemäß DIN 53512 (Ausgabe 2000-04) herangezogen (nachfolgend als "Rückprallelastizität R (70°C)" bezeichnet). Der zu erwartende Rollwiderstand ist umso besser (geringer), je größer die Rückprallelastizität R (70°C) ist.

Die Rückprallelastizität R (70°C) wurde wie folgt ermittelt:
Ermittlung nach DIN 53512:
   - Prüfung von Kautschuk und Elastomeren - Bestimmung der RückprallElastizität (Schob-Pendel)
   - Ausgabe 2000-04
   - Vulkanisationsparameter (Herstellung der Prüfkörper):
      ∘ Vulkanisationstemperatur: 160°
      ∘ Vulkanisationszeit: 15 Minuten
   - Prüfkörper:
      ∘ Hergestellt durch Vulkanisation von planparallel Scheiben und Ausstanzen
      ∘ Abmessungen der Prüfkörper
         ▪ Durchmesser = 44,6 mm
         ▪ Dicke = 6,3 mm ± 0,3 mm
   - Prüfparameter:
      ∘ Verwendetes Gerät: Ausführung nach Schob
         ▪ Prüfkörperhalterung: Mechanische Klemmvorrichtung
      ∘ Anzahl der Prüfkörper (Angabe des arithmetischen Mittelwerts): Zwei
      ∘ Vorbehandlung der Prüfkörper:
         ▪ Temperierzeit: 30 Minuten
         ▪ Temperatur (Prüfkörpertemperatur): 70°C ± 1°C
      ∘ Prüftemperatur: 70°C ± 2°C

Als Indikator für das Zusammenspielen der Gürtelgummierung G mit den Stahlkorden 7, 8 wird der Modul E' bei einer Dehnung von 0,15% und einer Temperatur von 55°C gemäß ISO 4664-1 (Ausgabe 2022-07) herangezogen (in der Norm als "elastic normal modulus", "storage normal modulus" und "elastic Young's modulus" bezeichnet). Dieser Modul E' wird nachfolgend als "Modul E' (0,15%, 55°C)" bezeichnet. Je größer der Modul E' (0,15%, 55°C) ist, desto günstiger ist dies für das Zusammenspielen mit den Stahlkorden 7, 8.

Der Modul E' (0,15%, 55°C) wurde wie folgt ermittelt:
Ermittlung nach ISO 4664-1:
- Elastomere oder thermoplastische Elastomere - Bestimmung der dynamischen Eigenschaften - Teil 1: Grundsätze
- Ausgabe 2022-07
- Vulkanisationsparameter (Herstellung der Prüfkörper):
   ∘ Vulkanisationstemperatur: 160°C
   ∘ Vulkanisationszeit: 15 Minuten
- Prüfkörper:
   ∘ Hergestellt durch Vulkanisation von planparallel Scheiben und Ausstanzen oder Durchbohren

   ∘ Abmessungen der Prüfkörper:
      ▪ Höhe L₀ = 10 mm
      ▪ Durchmesser d₀ = 10 mm
- Prüfparameter:
   ∘ Anzahl der Prüfkörper: Einer
   ∘ Art der Gummi-Metall-Bindung: Aufliegend (Der Prüfkörper wird zwischen den entsprechenden Stempel gestellt)
   ∘ Vorbehandlung der Prüfkörper:
      ▪ Temperierzeit: 15 Minuten
      ▪ Temperatur (Prüfkörpertemperatur): 55°C ± 1°C
   ∘ Vorkonditionierung der Prüfkörper:
      ▪ Kompression, 5 x (20% ± 12%) bei 10 Hz und Raumtemperatur (25°C)
   ∘ Prüftemperatur: 55°C ± 1°C
   ∘ Dehnungsweep: Kompression, 20% ± 0,1% bis ± 12,0% bei 10 Hz
   ∘ Art der Temperierung:
      ▪ Messen bei konstanter Temperatur

Als Rissbeständigkeitsindikator wird die Reißdehnung gemäß DIN 53504 (Ausgabe 2017-03) bei einer Temperatur von 25°C herangezogen (nachfolgend als "Reißdehnung ε_{R} (25°C)" bezeichnet). Eine größere Reißdehnung ε_{R} (25°C) lässt eine bessere Rissbeständigkeit der Gürtelgummierung G erwarten.

Die Reißdehnung ε_{R} (25°C) wurde wie folgt ermittelt:
Ermittlung nach DIN 53504:
- Prüfung von Kautschuk und Elastomeren - Bestimmung von Reißfestigkeit, Zugfestigkeit, Reißdehnung und Spannungswerten im Zugversuch
- Ausgabe 2017-03
- Vulkanisationsparameter (Herstellung der Prüfkörper):
   ∘ Vulkanisationstemperatur: 160°C
   ∘ Vulkanisationszeit: 15 Minuten
   v Vulkanisation unter Druck
- Prüfkörper: Ring
   ∘ Hergestellt durch Vulkanisation von planparallel Scheiben und Ausstanzen
   v Abmessungen des Rings:
      ▪ Außendurchmesser D = 52,6 mm
      ▪ Innendurchmesser d = 44,6 mm
      ▪ Dicke 6,3 mm ± 0,3 mm
   - Messparameter:
      ∘ Temperierzeit: 30 Minuten
      ∘ Temperatur: 25°C ± 1°C

Die Gürtelgummierung G weist eine Rückprallelastizität R (70°C) von 45% bis 60%, insbesondere von zumindest 50%, einen Modul E' (0,15%, 55°C) von mindestens 12,0 MPa, insbesondere von 14,0 MPa bis 20,0 MPa, und eine Reißdehnung ε_{R} (25°C) von 350% bis 500%, insbesondere von 400% bis 500%, auf.

### 3. Zu den Stahlfilamenten der Stahlkorde 7, 8

Fig. 2 und Fig. 3 zeigen je einen Querschnitt durch einen Abschnitt der Gürtellage 2a, 2c (Fig. 3) bzw. der Gürtellage 2b (Fig. 2). Die bereits erwähnten Stahlkorde 7 der mittleren Gürtellage 2b (Fig. 2) sind innerhalb jeder Gürtellage 2b übereinstimmend ausgeführt, wobei die Stahlkorde 7 der einen Gürtellage 2b mit jenen der anderen Gürtellage 2b vorzugsweise ebenfalls übereinstimmen. Die bereits erwähnten Stahlkorde 8 der Gürtellagen 2a, 2c (Fig. 3) sind innerhalb jeder der Gürtellagen 2a, 2c übereinstimmend ausgeführt, wobei die Stahlkorde 8 der Gürtellagen 2a mit jenen der Gürtellage 2c vorzugsweise ebenfalls übereinstimmen.

Die Stahlkorde 7, 8 sind jeweils aus mehreren, übereinstimmenden Stahlfilamenten 9 mit einem Durchmesser d von 0,14 mm bis 0,50 mm, insbesondere von 0,17 mm bis 0,40 mm, vorzugsweise von höchstens 0,36 mm, bevorzugt von höchstens 0,28 mm, gebildet.

Zur Beschreibung der Stahlkorde 7, 8 wird anschließend mehrfach auf die in der Norm ISO 17832:2018 (Non-parallel steel wire and cords for tyre reinforcement, Second Edition 2018-05) definierten Begriffe verwiesen, wobei jeweils kurz angegeben ist, in welchem Abschnitt der Norm die Definitionen der Begriffe zu finden sind.

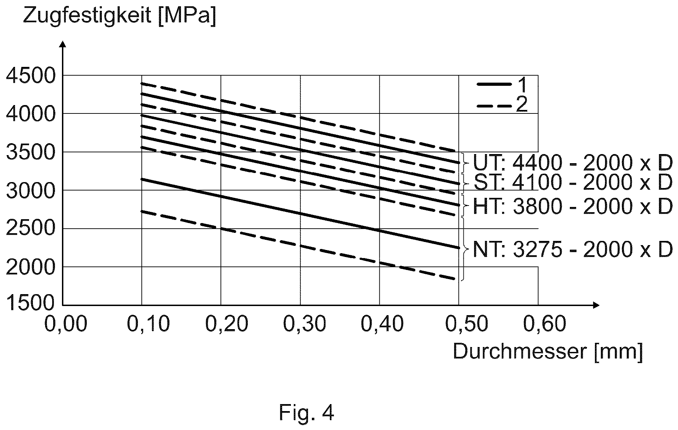

Fig. 4 zeigt eine aus dem Norm ISO 17832:2018, Abschnitt 4.1, stammende Darstellung mit angepasster Achsenbeschriftung. Auf der Abszisse ist der Durchmesser der Stahlfilamente in Millimeter (mm) und auf der Ordinate die Zugfestigkeit der Stahlfilamente in Mega-Pascal (MPa) aufgetragen. Stahlfilamente bestehen bekannter Weise aus Stahl einer bestimmten Festigkeitsklasse. Die durchgezogenen Linien (Linien 1) stellen für Stahlfilamente der Festigkeitsklassen NT (normal standard (or regular) tensile strength cord), HT (high tensile strength cord), ST (super tensile strength cord) und UT (ultra tensile strength cord) den Zielwert für die Zugfestigkeit der Stahlfilamente in Abhängigkeit des Durchmessers dar. Die strichlierten Linien (Linien 2) stellen die Toleranzbereiche um die durchgezogenen Linien, also um die Zielwerte, dar. Die Zielwerte für die Zugfestigkeit der Stahlfilamente der verschiedenen Festigkeitsklassen folgen jeweils aus der zugehörigen Geradengleichung.

Die allgemeine Geradengleichung lautet bekannter Weise: $y = m ⋅ x + n$
- x, y: Variablen
- m: Steigung der Geraden
- n: y-Achsenabschnitt (Ordinatenabschnitt, Inhomogenität, Verschiebungskonstante)

Für den Zielwert der Zugfestigkeit der Stahlfilamente aus Stahl der Festigkeitsklasse UT gilt gemäß der ISO 17832:2018 folgende Geradengleichung: $\begin{matrix}Zugfestigkeit \left[MPa\right] = - 2000 MPa / mm ⋅ d \left[mm\right] + 4400 MPa \\ = 4400 MPa - 2000 MPa / mm ⋅ d \left[mm\right]\end{matrix}$
- d [mm]: Durchmesser der Stahlfilamente in Millimeter

Die Stahlfilamente 9 weisen eine Zugfestigkeit auf, deren Mindestwert, bevorzugter Mindestwert, besonders bevorzugter Mindestwert und am meisten bevorzugter Mindestwert in Tabelle 2 angeführt sind.

**Tabelle 2**

| Zugfestigkeit-Mindestwert [MPa] | |
|---|---|
| Allgemein | 4200 MPa - 2000 MPa/mm · d [mm] |
| Bevorzugt | 4250 MPa - 2000 MPa/mm · d [mm] |
| Besonders bevorzugt | 4400 MPa - 2000 MPa/mm · d [mm] |
| Am meisten bevorzugt | 4700 MPa - 2000 MPa/mm · d [mm] |

### Beispiel:

Ein Stahlfilament 9 mit einem Durchmesser d von 0,28 mm weist einen Zugfestigkeits-Mindestwert von 3640 MPa (= 4200 - 2000 · 0,28) auf. Diese Stahlfilamente 9 sind daher, entsprechend der Toleranzbereiche (vergl. Fig. 4), Stahlfilamente der Festigkeitsklasse ST bzw. UT, bevorzugt Stahlfilamente der Festigkeitsklasse UT.

Gemäß der ISO 17832:2018 besteht zwischen der Zugfestigkeit der jeweils eingesetzten Stahlfilamente 9 und der Bruchspannung des Stahlkords 7 bzw. 8 folgender Zusammenhang: $F = n ⋅ \left(f⋅cos α\right) ⋅ \left(1-C\right)$
- F: Bruchspannung des Stahlkords [MPa] ("cord breaking load")
- f: Zugfestigkeit eins einzelnen Stahlfilaments [MPa]
- α: Schlagwinkel [°] ("cabeling angle")
- n: Anzahl der Filamente
- C: Seilfaktor ("cabeling loss on tensile strength")

Obige Gleichung 4 ist nicht exakt (bzw. vereinfacht), da die Filamente, welche Lagenfilamente sind, getrennt von den Filamenten, welche Kernfilamente sind, zu betrachten sind (siehe Gleichung 5), um einen etwaigen Unterschied des Schlagwinkels α der die Lagenfilamente bildenden Stahlfilamente vom Schlagwinkel α der die Kernfilamente bildenden Stahlfilamente zu berücksichtigen. Stimmt der Schlagwinkel α der die Lagenfilamente bildenden Stahlfilamente mit dem Schlagwinkel α der die Kernfilamente bildenden Stahlfilamente überein, führen Gleichung 4 und Gleichung 5 zum selben Ergebnis. $F = {\sum }_{i = 0}^{N} {n}_{i} ⋅ \left({f}_{i}⋅cos {α}_{i}\right) ⋅ \left(1-C\right)$
- F: Bruchspannung des Stahlkords [MPa] ("cord breaking load")
- fᵢ: Zugfestigkeit eins einzelnen Stahlfilaments [MPa]
- αᵢ: Schlagwinkel der Lagenfilamente bzw. der Kernfilamente [°] ("cabeling angle")
- nᵢ: Anzahl der Lagenfilamente bzw. der Kernfilamente
- C: Seilfaktor ("cabeling loss on tensile strength")

Wie auch die obigen Gleichungen 4 und 5 zeigen, ist es bekannt, dass die Bruchspannung F eines Stahlkords nicht ausschließlich von der Zugfestigkeit fᵢ und der Anzahl n der eingesetzten Stahlfilamente abhängt. Gemäß den Gleichung 4 und 5 sind der Schlagwinkel α und der Seilfaktor C zu berücksichtigen.

Die Bruchspannung F eines Stahlkords ist bekannter Weise die beim Zugversuch erreichte, maximale Zugkraft bezogen auf den Anfangsquerschnitt des Stahlkords (Querschnittsfläche vor Start des Zugversuchs). Die Querschnittsfläche bezieht sich auf einen einhüllenden, kleinstmöglichen Kreis K (Fig. 2, Fig. 3), wie unten unter Punkt 4 und 5 für die Stahlkorde 7, 8 erläutert.

Der Schlagwinkel α (Flechtwinkel) gibt bekannter Weise an, unter welchem Winkel die Stahlfilmente eines Stahlkords zur Stahlkordachse geneigt sind.

Der Term (1 - C) ist als "spinning loss factor" bekannt und berücksichtigt den sogenannten Verseilverlust. Der "Verseilverlust" bezeichnet die Verringerung der Zugfestigkeit des Stahlkords gegenüber den aufsummierten Zugfestigkeiten seiner Stahlfilamente.

Der im spinning loss factor enthaltene "Seilfaktor C" ist ein konstruktionsbedingter Verlustfaktor, welcher ein Erfahrungswert ist und berücksichtigt, dass durch die verschiedenen Konstruktionen von Stahlkorden unterschiedliche Belastungen und somit Zusatzbeanspruchungen in den einzelnen Stahlkorden auftreten. Stahlkorde weisen in der Regel eine um zirka 2% bis 15% geringere Zugfestigkeit als die Summe der Zugfestigkeiten ihrer einzelnen Stahlfilamente auf, sodass der Seilfaktor üblicherweise 2% bis 15%, also 0,02 bis 0,15, und folglich der spinning loss factor 0,85 (= 1 - 0,15) bis 0,98 (= 1 - 0,02) beträgt.

Der Schlagwinkel α und der Seilfaktor C sind im Allgemeinen dem Produktdatenblatt eines Stahlkords entnehmbar oder können beim Hersteller des Stahlkords erfragt werden.

Der zugehörige Zugversuch des Stahlkords 7, 8 liefert dessen maximale Zugkraft. Aus der maximalen Zugkraft ist durch Division durch den Anfangsquerschnitt des Stahlkords 7, 8 die Bruchspannung F des Stahlkords 7, 8 ermittelbar. Aus der Bruchspannung F des Stahlkords 7, 8 lässt sich mittles obiger Gleichung 4 bzw. 5 auf die Zugfestigkeit f bzw. fᵢ eins einzelnen Stahlfilaments 9 zurückrechnen, sofern der Schlagwinkel α bzw. die Schlagwinkel αᵢ, die Anzahl n der Filamente bzw. die Anzahl nᵢ der Lagenfilamente und Kernfilamente und der Seilfaktor C bekannt sind.

Unter Punkt 4 und Punkt 5 sind Gleichungen 5 für beispielhafte Stahlkorde 7, 8 angeführt.

### 4. Zu den Stahlkorden 7 und deren Anordnung innerhalb der mittleren Gürtellagen 2b

Die Stahlkorde 7 (Fig. 2) sind innerhalb jeder Gürtellage 2b in einer Korddichte von 30 epdm (ends per decimeter) bis 60 epdm angeordnet und verlaufen, in Draufsicht betrachtet, zur Umfangsrichtung unter einem Winkel von 15° bis 40°, insbesondere von bis zu 24°, vorzugweise von bis zu 22°, besonders bevorzugter Weise von bis zu 20°.

Die Stahlkorde 7 sind vom Typ offener Stahlkord (ISO 17832:2018, Abschnitt 4.3 Classification based on cord type, OC: open cord) und weisen die Konstruktion M+N (ISO 17832:2018, Abschnitt 4.2 Classification based on cord structure, M+N type cords) mit N > 2, insbesondere mit N > 3, vorzugsweise mit N > 4, auf. M steht für die Anzahl der Kernfilamente bildenden Stahlfilamente 9. N steht für die Anzahl der um die die Kernfilamente bildenden Stahlfilamente 9 verlaufenden, die Lagenfilamente bildenden Stahlfilamente 9. Bevorzugt gilt N ≤ 9. M beträgt vorzugsweise 1 bis 4. Bevorzugt weisen die Stahlkorde 7 die Konstruktion 1+5, 2+4, 2+7 oder 3+8 auf. "Offener Typ" bedeutet, dass die Stahlfilamente 9 derart verseilt und relativ zueinander beweglich sind, dass bei der Vulkanisation Gummimaterial in den Stahlkord 7 eindringen kann. Die die Lagenfilamente bilden Stahlfilamente 9 sind dabei zumindest abschnittsweise nicht in Kontakt miteinander.

Der beim Ausführungsbeispiel in Fig. 2 gezeigte Stahlkord 7 weist die Konstruktion 3 + 8 auf und ist dementsprechend aus drei die Kernfilamente bildende Stahlfilamente 9 und acht die Lagenfilamente bildende Stahlfilamente 9 aufgebaut. Der Seilfaktor C dieses beispielhaften Stahlkords 7 beträgt 4% (0,04). Der Schlagwinkel α der die drei Kernfilamente bildende Stahlfilamente 9 beträgt 8,03°. Der Schlagwinkel α der acht die Lagenfilamente bildenden Stahlfilamente 9 beträgt 10,91°. Für diesen beispielhaften Stahlkord 7 ergibt sich daher folgende Gleichung 5: $F = {\sum }_{i = 0}^{N} {n}_{i} ⋅ \left({f}_{i}⋅cos {α}_{i}\right) ⋅ \left(1-C\right)$ $F = 3 ⋅ \left({f}_{i}⋅cos 8,03°\right) ⋅ \left(1-0,04\right) + 8 ⋅ \left({f}_{i}⋅cos 10,91°\right) ⋅ \left(1-0,04\right)$ $F = \left[3⋅\left({f}_{i}⋅cos 8,03°\right)+8⋅\left({f}_{i}⋅cos 10,91°\right)\right] ⋅ \left(1-0,04\right)$ $F = \left[3⋅\left({f}_{i}⋅cos 8,03°\right)+8⋅\left({f}_{i}⋅cos 10,91°\right)\right] ⋅ 0 , 06$

Durch entsprechendes Umformen lässt sich die Zugfestigkeit fᵢ des Stahlfilaments 9 aus der über die gemessene Bruchkraft des Stahlkords 7 errechneten Bruchspannung F des Stahlkords 7 errechnen.

Die Stahlkorde 7 sind ferner derart in der mittleren Gürtellage 2b angeordnet, dass einander unmittelbar benachbarte Stahlkorde 7 - im Reifenquerschnitt betrachtet und bezogen auf die Stahlkorde 7 einhüllende, kleinstmögliche Kreise K - voneinander als kleinstmögliche Abstände ermittelte gegenseitige Abstände a₁ von zumindest 0,45 mm, insbesondere von zumindest 0,60 mm, bevorzugt von zumindest 0,70 mm, aufweisen. Die Obergrenze der gegenseitigen Abstände a₁ ergibt sich aus der kleinstmöglichen Korddichte von 30 epdm bei entsprechend gleichmäßiger Anordnung der Stahlkorde 7 innerhalb der jeweiligen mittleren Gürtellage 2b. Der bereits erwähnte Anfangsquerschnitt des Stahlkords 7

(Querschnittsfläche des Stahlkords 7), welcher erforderlich ist, um aus der maximalen Zugkraft des Stahlkords 7 die Bruchspannung F des Stahlkords 7 zu errechnen, entspricht der Querschnittsfläche des kleinstmöglichen Kreise K, welcher sich in bekannter Weise errechnen lässt (π · (Durchmesser des Kreises K)²/4).

### 5. Zu den Stahlkorden 8 und deren Anordnung innerhalb der radial innersten Gürtellage 2a und der radial äußersten Gürtellage 2c

Die Stahlkorde 8 (Fig. 3) sind innerhalb der radial innersten Gürtellage 2a sowie innerhalb der radial äußersten Gürtellage 2c jeweils in einer Korddichte von 30 epdm (ends per decimeter) bis 60 epdm angeordnet und verlaufen, in Draufsicht betrachtet, innerhalb der radial innersten Gürtellage 2a zur Umfangsrichtung unter einem Winkel von 0° bis 70° und innerhalb der radial äußersten Gürtellage 2c zur Umfangsrichtung unter einem Winkel von 15° bis 40°.

Die Stahlkorde 8 sind vom Typ offener Stahlkord (ISO 17832:2018, Abschnitt 4.3 Classification based on cord type, OC: open cord) und weisen die Konstruktion M+N (ISO 17832:2018, Abschnitt 4.2 Classification based on cord structure, M+N type cords) auf. M beträgt bevorzugt 1 oder 2 und N beträgt bevorzugt 2 bis 5. Besonders bevorzugt weisen die Stahlkorde 8 die Konstruktion 1+2, 1+5, 2+2 oder 2+4 auf. Alternativ können die Stahlkorde 8 die Konstruktion "single-strand" (Stahlkord ohne Kernfilamente) aufweisen, wobei sie aus zwei miteinander verdrillen Stahlfilamenten 9 bestehen. Der Durchmesser d der Stahlfilamente 9 für einen Stahlkorde 8 der Konstruktion "single-strand" (ISO 17832:2018, Abschnitt 3.3.1) beträgt vorzugsweise 0,20 mm bis 0,35 mm.

Der beim Ausführungsbeispiel in Fig. 3 gezeigte Stahlkord 8 weist die Konstruktion 1 + 5 auf und ist dementsprechend aus einem einzigen ein Kernfilament bildenden Stahlfilament 9 und fünf Lagenfilamente bildenden Stahlfilamenten 9 aufgebaut. Der Seilfaktor C dieses beispielhaften Stahlkords 8 beträgt 4% (0,04). Der Schlagwinkel α der die fünf Lagenfilamente bildende Stahlfilamente 9 beträgt 6,27°. Für das das einzige Kernfilament bildende Stahlfilament 9 beträgt der Schlagwinkel α 0°. Für den beispielhaften Stahlkord 8 ergibt sich daher folgende Gleichung 5: $F = {\sum }_{i = 0}^{N} {n}_{i} ⋅ \left({f}_{i}⋅cos {α}_{i}\right) ⋅ \left(1-C\right)$ $F = 1 ⋅ \left({f}_{i}⋅cos 0°\right) ⋅ \left(1-0,04\right) + 5 ⋅ \left({f}_{i}⋅cos 6,27°\right) ⋅ \left(1-0,04\right)$ $F = \left[1⋅\left({f}_{i}⋅cos 0°\right)+5⋅\left({f}_{i}⋅cos 6,27°\right)\right] ⋅ \left(1-0,04\right)$ $F = \left[{f}_{i}+5⋅\left({f}_{i}⋅cos 6,27°\right)\right] ⋅ 0 , 06$

Die Stahlkorde 8 sind derart in der radial innersten Gürtellage 2a bzw. in der radial äußersten Gürtellage 2c angeordnet, dass einander unmittelbar benachbarte Stahlkorde 8 - im Reifenquerschnitt betrachtet und bezogen auf die Stahlkorde 8 einhüllende, kleinstmögliche Kreise K - voneinander als kleinstmögliche Abstände ermittelte gegenseitige Abstände a₁ (übereinstimmend zu den Stahlkorden 7) aufweisen. Die Obergrenze der gegenseitigen Abstände a₁ ergibt sich aus der kleinstmöglichen Korddichte von 30 epdm und entsprechend gleichmäßiger Anordnung der Stahlkorde 8 innerhalb der Gürtellage 2a bzw. Gürtellage 2c. Der bereits erwähnte Anfangsquerschnitt des Stahlkords 8 (Querschnittsfläche des Stahlkords 8), welcher erforderlich ist, um aus der maximalen Zugkraft des Stahlkords 8 die Bruchspannung F des Stahlkords 8 zu errechnen, entspricht der Querschnittsfläche des kleinstmöglichen Kreise K, welcher sich in bekannter Weise errechnen lässt (π - (Durchmesser des Kreises K)²/4).

Die Erfindung ist auf das beschriebene Ausführungsbeispiel nicht beschränkt.

Die Gürtelgummierung G kann von der beschriebenen Ausführung abweichen und beispielsweise herkömmlich ausgeführt sein. Der Nutzfahrzeugreifen weist zumindest drei, insbesondere genau drei, genau vier oder genau fünf, Gürtellagen auf, wobei in der bzw. zumindest in einer der mittleren Gürtellage(n) 2b (Arbeitslage(n)) die erwähnten Stahlkorde 7 vorgesehen sind. In der radial innersten Gürtellage und/oder der radial äußersten Gürtellage können anstelle von Stahlkorden jeweils einzelnen Stahlfilamente (kein Stahlkord) als Stahlfestigkeitsträger vorgesehen sein.

Sind genau vier Gürtellagen vorgesehen, kann - abweichend vom beschriebenen Ausführungsbeispiel - eine der beiden mittleren Gürtellagen 2b als 0°-Lage mit in bekannter Weise ausgeführten Stahlkorden ausgeführt sein, wobei die Stahlkorde in der 0°-Lage zur Umfangsrichtung unter einem Winkel von 0° bis 5°, insbesondere von bis zu 3°, verlaufen. Sind genau fünf Gürtellagen vorgesehen, ist es bevorzugt, dass in zumindest zwei der drei mittleren Gürtellagen die beschriebenen Stahlkorde 7 vorhanden sind und/oder dass genau eine der drei mittleren Gürtellagen, insbesondere die in der Mitte befindliche Gürtellage (dritte Gürtellage), als 0°-Lage ausgeführt ist. Die Stahlkorde in der radial innersten Gürtellage 2a und die Stahlkorde in der radial äußersten Gürtellage 2c können vom den im Rahmen des Ausführungsbeispiels beschriebenen Stahlkorden 8 abweichen.

### Bezugszeichenliste

- 1: Laufstreifen
- 2: Gürtelverband
- 2a: radial innerste Gürtellage
- 2b: mittlere Gürtellage
- 2c: radial äußerste Gürtellage
- 3: Karkasseinlage
- 4: Innenschicht
- 5: Seitenwand
- 6: Schulterpolster
- 6': Gürtelkantenpolster
- 7: Stahlkord
- 8: Stahlkord
- 9: Stahlfilament
- A: Doppelpfeil (axiale Richtung)
- a₁: Abstand
- A-A: Linie (Reifenäquatorialebene)
- d: Durchmesser
- G: Gürtelgummierung
- K: Kreis
- R: Doppelpfeil (radiale Richtung)

## Patentansprüche

1. Nutzfahrzeugreifen mit einem Gürtelverband (2) mit einer radial innersten Gürtellage (2a), einer radial äußersten Gürtellage (2c) und zumindest einer zwischen diesen befindlichen mittleren Gürtellage (2b), wobei die Gürtellagen (2a, 2b, 2c) jeweils aus in eine Gürtelgummierung (G) eingebetteten Stahlfilamenten oder aus Stahlfilamenten (9) gebildeten Stahlkorden (7, 8) bestehen, wobei in der bzw. den mittleren Gürtellage(n) (2c) Stahlkorde (7) vom Typ offener Stahlkord vorgesehen sind, welche die Konstruktion M+N aufweisen und aus Stahlfilamenten (9) gebildet sind, welche einen Durchmesser (d) von höchstens 0,50 mm und eine Zugfestigkeit - ermittelt nach ISO 17832:2018 - aufweisen, deren Mindestwert 4200 MPa - 2000 MPa/mm · d [mm] beträgt, wobei d [mm] der Durchmesser (d) der Stahlfilamente (9) in Millimeter ist,
**dadurch gekennzeichnet,**
**dass** die Stahlkorde (7) der oder jeder oder zumindest einer der mittleren Gürtellage(n) (2b) die Konstruktion M+N aufweisen, wobei N > 2 ist.

2. Nutzfahrzeugreifen nach Anspruch 1, **dadurch gekennzeichnet, dass** die Stahlkorde (7) der oder jeder oder zumindest einer der mittleren Gürtellage(n) (2b) die Konstruktion M+N aufweisen, wobei N > 3, vorzugsweise N > 4, ist.

3. Nutzfahrzeugreifen nach Anspruch 1 oder 2, **dadurch gekennzeichnet, dass** die Stahlkorde (7) der oder jeder oder zumindest einer der mittleren Gürtellage(n) (2b) die Konstruktion M+N aufweisen, wobei N ≤ 9 ist.

4. Nutzfahrzeugreifen nach einem der Ansprüche 1 bis 3, **dadurch gekennzeichnet, dass** die Stahlkorde (7) der oder jeder oder zumindest einer der mittleren Gürtellage(n) (2b) die Konstruktion M+N aufweisen, wobei M 1 bis 4 beträgt.

5. Nutzfahrzeugreifen nach einem der Ansprüche 1 bis 4, **dadurch gekennzeichnet, dass** die Stahlkorde (7) der oder jeder oder zumindest einer der mittleren Gürtellage(n) (2b) die Konstruktion 1+5, 2+4, 2+7 oder 3+8 aufweisen.

6. Nutzfahrzeugreifen nach einem der Ansprüche 1 bis 5, **dadurch gekennzeichnet, dass** in der radial innersten Gürtellage (2a) und/oder in der radial äußersten Gürtellage (2c) Stahlkorde (8) vorgesehen sind, welche aus Stahlfilamenten (9) gebildet sind, die einen Durchmesser (d) von höchstens 0,50 mm und eine Zugfestigkeit - ermittelt nach ISO 17832:2018 - aufweisen, deren Mindestwert 4200 MPa - 2000 MPa/mm · d [mm] beträgt, wobei d [mm] der Durchmesser (d) der Stahlfilamente (9) in Millimeter ist, und
- wobei die Stahlkorde (8) entweder die Konstruktion M+N aufweisen, wobei M 1 oder 2 und N von 2 bis 5 beträgt, oder
- wobei die Stahlkorde die Konstruktion single-strand aufweisen.

7. Nutzfahrzeugreifen nach einem der Ansprüche 1 bis 6, **dadurch gekennzeichnet, dass**
- die Stahlkorde (7) der oder jeder mittleren Gürtellage(n) (2b) und/oder
- die Stahlkorde (8) der radial innersten Gürtellage (2a) und der radial äußersten Gürtellage (2c)
jeweils in einer Korddichte von 30 epdm bis 60 epdm angeordnet sind.

8. Nutzfahrzeugreifen nach einem der Ansprüche 1 bis 7, **dadurch gekennzeichnet, dass**
- die Stahlkorde (7) der oder jeder mittleren Gürtellage(n) (2b) und/oder
- die Stahlkorde (8) der radial innersten Gürtellage (2a) und der radial äußersten Gürtellage (2c)
jeweils derart angeordnet sind, dass einander unmittelbar benachbarte Stahlkorde (7, 8) - im Reifenquerschnitt betrachtet und bezogen auf die Stahlkorde (7, 8) einhüllende, kleinstmögliche Kreise (K) - voneinander als kleinstmögliche Abstände ermittelte gegenseitige Abstände (a₁) von zumindest 0,45 mm, insbesondere von zumindest 0,60 mm, bevorzugt von zumindest 0,70 mm, aufweisen.

9. Nutzfahrzeugreifen nach einem der Ansprüche 1 bis 8, **dadurch gekennzeichnet, dass** die Stahlkorde (7) der Konstruktion M+N der bzw. jeder mittleren Gürtellage(n) (2b) unter einem Winkel von 15° bis 40°, insbesondere von bis zu 24°, vorzugweise von bis zu 22°, besonders bevorzugter Weise von bis zu 20°, verlaufen.

10. Nutzfahrzeugreifen nach einem der Ansprüche 9, **dadurch gekennzeichnet, dass** der Gürtelverband (2) genau vier oder genau fünf Gürtellagen (2a, 2b, 2c) aufweist, wobei bei genau vier Gürtellagen (2a, 2b, 2c) eine einzige der mittleren Gürtellagen (2b) als 0°-Lage ausgeführt ist und wobei bei fünf Gürtellagen die mittlere Gürtellage als 0°-Lage ausgeführt ist, wobei die Stahlkorde in der 0°-Lage zur Umfangsrichtung unter einem Winkel von 0° bis 5°, insbesondere von bis zu 3°, verlaufen und von den Stahlkorden (7) der Konstruktion M+N in der bzw. jeder anderen mittleren Gürtellage (2b) abweichen, insbesondere Stahlkorde mit einer von der Konstruktion M+N abweichenden Konstruktion sind.

11. Nutzfahrzeugreifen nach einem der Ansprüche 1 bis 10, **dadurch gekennzeichnet, dass** der Mindestwert der Zugfestigkeit der Stahlfilamente (9) 4250 MPa - 2000 MPa/mm · d [mm], insbesondere 4400 MPa - 2000 MPa/mm - d [mm], bevorzugt 4700 MPa - 2000 MPa/ mm· d [mm], beträgt.

12. Nutzfahrzeugreifen nach einem der Ansprüche 1 bis 11, **dadurch gekennzeichnet, dass** der Durchmesser (d) der Stahlfilamente (9) der Stahlkorde (7, 8) mindestens 0,14 mm, insbesondere 0,17 mm bis 0,40 mm, vorzugsweise höchstens 0,36 mm, bevorzugt höchstens 0,28 mm, beträgt.

13. Nutzfahrzeugreifen nach einem der Ansprüche 1 bis 12, **dadurch gekennzeichnet, dass** die Gürtelgummierung (G) eine Rückprallelastizität bei einer Temperatur von 70°C (R (70°C)), ermittelt nach DIN 53512, von 45% bis 60%, insbesondere von zumindest 50%, aufweist.

14. Nutzfahrzeugreifen nach einem der Ansprüche 1 bis 13, **dadurch gekennzeichnet, dass** die Gürtelgummierung (G) einen Modul E' bei einer Dehnung von 0,15% und einer Temperatur von 55°C (E' (0,15%, 55°C)), ermittelt gemäß ISO 4664-1, von mindestens 12,0 MPa, insbesondere von 14,0 MPa bis 20,0 MPa, aufweist.

15. Nutzfahrzeugreifen nach einem der Ansprüche 1 bis 14, **dadurch gekennzeichnet, dass** die Gürtelgummierung (G) eine Reißdehnung bei einer Temperatur von 25°C (ε_{R} (25°C)), ermittelt nach DIN 53504, von 350% bis 500%, insbesondere von 400% bis 500%, aufweist.
